(19) Europäisches Patentamt
European Patent Office
Office européen des brevets

(11) **EP 1 343 327 B1**

(12) **FASCICULE DE BREVET EUROPEEN**

(45) Date de publication et mention
de la délivrance du brevet:
**15.06.2011 Bulletin 2011/24**

(51) Int Cl.:
*H04N 7/24* (2011.01)  *H04N 7/26* (2006.01)

(21) Numéro de dépôt: **02080355.7**

(22) Date de dépôt: **18.12.2002**

(54) **Procédé pour effectuer un traitement sur un contenu multimedia**

Verfahren zur Verarbeitung von Multimediainhalt

Method for processing multimedia content

(84) Etats contractants désignés:
**AT BE BG CH CY CZ DE DK EE ES FI FR GB GR
IE IT LI LU MC NL PT SE SI SK TR**

(30) Priorité: **28.12.2001 FR 0116997**

(43) Date de publication de la demande:
**10.09.2003 Bulletin 2003/37**

(73) Titulaire: **Koninklijke Philips Electronics N.V.
5621 BA Eindhoven (NL)**

(72) Inventeurs:
• **Amielh, Myriam,
Société Civile S.P.I.D.
75008 Paris (FR)**

• **Devillers, Sylvain,
c/o Société Civile S.P.I.D.
75008 Paris (FR)**
• **Martin, Francois,
c/o Société Civile S.P.I.D.
75008 Paris (FR)**

(74) Mandataire: **Roche, Denis et al
Philips IP&S France
Société Civile SPID
33 rue de Verdun
BP 313
92156 Suresnes Cedex (FR)**

(56) Documents cités:
**WO-A-01/45391     WO-A-01/69936
GB-A- 2 361 097     US-B1- 6 233 278**

**Description**

Domaine de l'invention

La présente invention concerne un procédé pour effectuer un traitement sur au moins un contenu multimédia. Elle concerne aussi un produit obtenu par la mise en oeuvre d'un tel procédé, et des utilisations d'un tel produit.
Elle concerne aussi un programme comportant des instructions pour la mise en oeuvre d'un tel procédé lorsqu'il est exécuté par un processeur.
Elle concerne aussi un équipement comportant des moyens pour la mise en oeuvre d'un tel procédé et un système comportant une première et une seconde entités, ladite première entité étant destinée à fournir un flux binaire obtenu par codage dudit contenu multimédia, et ladite seconde entité étant destinée à exécuter ledit traitement.
L'invention a d'importantes applications dans le domaine de la création et de la manipulation de contenu multimédia. Elle concerne les applications grand-public et les applications professionnelles.

Arrière plan technologique de l'invention

La demande de brevet internationale WO 01/67771 A2 déposée le 07 mars 2001 décrit un procédé de description d'une image numérisée composée de pixels, utilisant l'un des langages XML, HTML, MPEG-7. Cette description comporte des données relatives à des zones de l'image. Un tel procédé est destiné à être utilisé pour la transmission de données cartographiques afin de permettre à un utilisateur d'indiquer dans une requête la zone d'image qu'il souhaite recevoir.
WO 01 69936 décrit une technique pour transcoder un contenu audiovisuel disponible dans un format source. Des indices de transcodage sont calculés à partir des données suivantes ; le contenu audiovisuel, une description du format source, et une description d'un format cible. Les indices de transcodage sont utilisées pour effectuer un transcodage du contenu audiovisuel, disponible dans le format source, vers le format cible.
US 6 233 278 décrit une technique pour améliorer un codage de vidéo. Une séquence d'images est prétraitée pour extraire des informations concernant la séquence d'images. Ces informations sont insérées dans la séquence d'images afin qu'un encodeur puisse les utiliser pour définir un ou plusieurs paramètres de codage.
WO 01 45391 décrit une technique pour une production vidéo en assemblant des segments de vidéo. Les segments vidéo sont sélectionnés à partir des valeurs de descripteurs qui leurs sont associés. En outre, les segments vidéo sont placés selon une séquence particulière à partir des valeurs de leurs descripteurs.
GB 2 361 097 décrit un système pour générer une production audio et/ou vidéo à partir d'une liste d'éléments de contenu pour la production audio et/ou vidéo.

Résumé de l'invention

L'invention propose un autre type d'applications faisant appel à des descriptions du genre précité.
Les revendications indépendantes définissent différentes aspects de l'invention. Les revendications dépendantes définissent des caractéristiques supplémentaires qui peuvent être avantageusement appliquées pour mettre en oeuvre l'invention.
L'invention consiste, pour effectuer un traitement sur un contenu multimédia, à utiliser une description structurée d'un flux binaire obtenu par codage dudit contenu multimédia selon un certain format de codage. Conformément à l'invention, les données de codage nécessaires au traitement ne sont pas récupérées directement dans le flux binaire, mais dans une description structurée du flux binaire.
L'invention présente plusieurs avantages :

- L'analyse syntaxique du flux binaire, qui est une opération lourde, est réalisée une fois pour toute pour générer une description du flux binaire. La description générée est ensuite utilisable par des applications variées.
- Les applications qui utilisent une telle description pour effectuer un traitement n'ont pas besoin de connaître les formats de codage utilisés pour encoder les contenus multimédia puisqu'elles n'ont pas à effectuer d'analyse syntaxique du flux binaire. Il leur suffit de connaître le langage dans lequel est écrit la description.
- Une même application peut par conséquent effectuer un même traitement sur différents formats de codage.

Dans un premier mode de réalisation, ledit traitement comporte une étape de génération d'informations de codage, exclues dudit format de codage, relatives audit flux binaire, et une étape d'adjonction desdites informations de codage à ladite description. Dans ce premier mode de réalisation de l'invention, la description du flux binaire est enrichie avec des informations de codage qui sont générées à partir de données de codage récupérées directement dans le flux binaire. Une telle description enrichie est ensuite utilisable par des applications variées.
Dans un premier exemple d'application, ledit contenu multimédia contient une suite de séquences vidéo, et lesdites informations de codage sont des indications de coupure entre deux séquences vidéo. De telles informations de coupure entre séquence vidéo sont avantageusement utilisées dans des applications de coupage, collage, concaténation de flux vidéo.

Dans un second exemple d'application, ledit contenu multimédia contient une pluralité d'unités élémentaires auxquelles correspondent un temps d'affichage et un temps de décodage, le codage d'une unité élémentaire étant dépendant ou indépendant des autres unités élémentaires, et lesdites informations comportent :

- des indications du caractère dépendant ou indépendant du codage desdites unités élémentaires,
- une indication dudit temps d'affichage,
- une indication dudit temps de décodage.

De telles informations de codage sont avantageusement utilisées pour lancer une lecture dudit contenu multimédia à partir d'un point choisi par un utilisateur.

Dans un second mode de réalisation, ledit traitement comporte une étape pour couper une partie d'un flux binaire obtenu par codage d'un contenu multimédia, et/ou une étape pour coller une partie d'un premier flux binaire obtenu par codage d'un premier flux multimédia dans un second flux binaire obtenu par codage d'un second contenu multimédia, et/ou une étape pour concaténer une partie d'un premier flux binaire obtenu par codage d'un premier contenu multimédia avec une partie d'un second flux binaire obtenu par codage d'un second contenu multimédia.

Dans un troisième mode de réalisation, ledit flux binaire est structuré par unités élémentaires comportant une partie audio et une partie vidéo, les données de codage récupérées dans la description dudit flux binaire sont constituées par au moins un descripteur de la partie audio d'une unité élémentaire, et ledit traitement comporte une étape pour modifier ladite partie audio.

Brève description des figures

L'invention va être décrite en regard des dessins annexés donnés à titre d'exemples non limitatifs et dans lesquels :

- la figure 1 représente un diagramme fonctionnel d'un exemple de procédé selon l'invention, pour effectuer un traitement sur un contenu multimédia,
- la figure 2 est un organigramme décrivant les étapes d'un premier exemple de procédé selon l'invention,
- la figure 3 est un organigramme décrivant les étapes d'un deuxième exemple de procédé selon l'invention,
- la figure 4 est un organigramme décrivant les étapes d'un troisième exemple de procédé selon l'invention,
- la figure 5 est un diagramme en blocs représentant un système selon l'invention.

Description de plusieurs modes de réalisation de invention

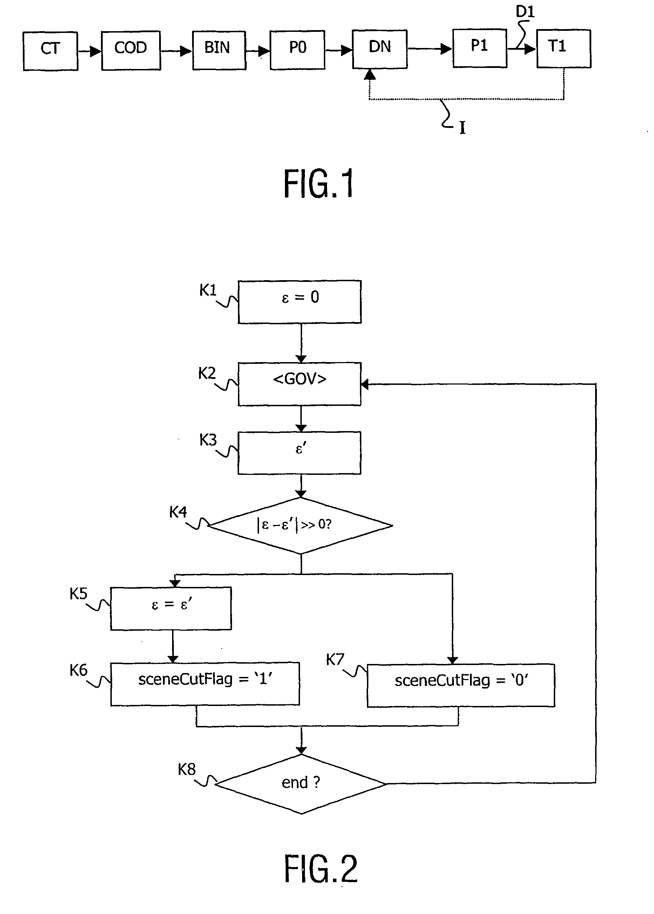

Sur la figure 1 on a représenté un diagramme en blocs d'un exemple de procédé selon l'invention pour effectuer un traitement sur un contenu multimédia. Un bloc CT représente un contenu multimédia. Un bloc COD représente une opération de codage, selon un certain format de codage, du contenu multimédia CT. Un bloc BIN représente un flux binaire obtenu par codage du contenu multimédia CT. Un bloc P0 représente une opération d'analyse syntaxique du flux binaire BIN, en vue de produire une description structurée dudit flux binaire BIN. Un bloc DN représente une description structurée du flux binaire BIN. Un bloc P1 représente une opération d'analyse syntaxique de la description DN pour récupérer une ou plusieurs données de codage D1 dans la description DN. Un bloc T1 représente une opération d'exécution d'un traitement à partir de la ou des données de codage D1 récupérées dans la description DN. De façon optionnelle, le traitement T1 comporte une étape de génération d'informations de codage IF relatives au flux binaire BIN, et une étape d'adjonction des informations de codage IF à la description DN. Les données de codage D1 sont des données incluses dans le format de codage. Elles sont donc récupérables par simple analyse syntaxique de la description DN. Les informations de codage IF sont des informations exclues du format de codage qui sont obtenues en effectuant un traitement sur les données de codage D1.

La description DN est une description structurée du flux binaire BIN, c'est-à-dire qu'un certain niveau de représentation de la structure du flux binaire est directement apparent dans la description DN (la structure du flux binaire dépend du format de codage utilisé).

De façon avantageuse, la description DN est écrite dans un langage de balisage. Un langage de balisage est un langage qui utilise des balises et qui définit des règles d'utilisation de ces balises pour décrire la syntaxe d'un ensemble de données (le flux binaire ici). Un tel langage permet donc de structurer un ensemble de données, c'est-à-dire de séparer la structure de l'ensemble de données de son contenu. A titre d'exemple, on utilise le langage XML (eXtensible Markup Language) défini par le consortium W3C.

L'opération P0 d'analyse syntaxique du flux binaire BIN a pour objet de générer une description structurée DN du flux binaire.

Dans un premier mode de réalisation de l'invention, l'opération d'analyse syntaxique P1 de la description DN a pour objet d'enrichir la description structurée DN avec des informations de codage IF exclues du format de codage. Une telle description enrichie est ensuite susceptible d'être utilisée pour effectuer des traitements applicatifs sur le contenu multimédia.

Dans un second mode de réalisation de l'invention, l'opération d'analyse syntaxique P1 de la description DN a pour objet d'exécuter un traitement applicatif sur le contenu multimédia.

Dans la suite, on donnera des exemples de ces deux modes de réalisation de l'invention, en utilisant différents formats de codage vidéo.

Une vidéo comporte en général une pluralité de séquences vidéo constituées chacune d'une pluralité d'unités élémentaires ayant un temps de décodage et un temps d'affichage. Dans la norme de codage MPEG-2 par exemple, ces unités élémentaires sont appelées images (Frame), et un groupe d'images est appelés GOP (Group of Pictures). Dans la norme de codage MPEG-4, ces unités élémentaires sont appelées VOPs (Video Object Plane) et un groupe de VOPs est appelé GOVs (Group Of VOPs). Le codage d'une unité élémentaire peut être indépendant ou dépendant d'autres unités élémentaires. Par exemple, dans les normes de codage MPEG-2 et MPEG-4, une unité élémentaire codée indépendamment des autres unités élémentaires est appelée unité élémentaire de type I. Une unité élémentaire codée par prédiction par rapport à une unité élémentaire précédente est appelée unité élémentaire de type P. Et une unité élémentaire codée par prédiction bi-directionnelle par rapport à une unité élémentaire précédente et une unité élémentaire future est appelée unité élémentaire de type B.

**Exemple 1**

On va maintenant donner un premier exemple de mise en oeuvre de l'invention, dans lequel le traitement T1 a pour objet de générer des informations de codage à ajouter à la description DN. Le passage d'une séquence vidéo à une séquence vidéo suivante correspond à une coupure dans la vidéo. Dans ce premier exemple, les informations de codage ajoutées à la description sont des informations permettant de localiser les coupures entre les séquences vidéo. De telles informations sont souvent utiles dans les applications de manipulation de vidéo puisqu'elles permettent par exemple à l'utilisateur d'identifier le début des séquences vidéo qu'il souhaite extraire d'une vidéo. Elles sont aussi utiles dans des applications d'extraction automatique de table des matières.

Dans ce premier exemple, on considère le cas où la vidéo est codée selon l'une des normes de codage MPEG-2 ou MPEG-4, et où les coupures entre séquences vidéo coïncident avec des débuts de groupes GOPs ou GOVs. Une telle coïncidence entre les coupures de séquence vidéo et le début des groupes GOPs ou GOVs est possible lorsque la diffusion de la vidéo n'est pas soumise à des contraintes temps réel, parce que dans ce cas le codage peut tenir compte de la structure bas niveau du contenu multimédia (dans le cas présent, il doit tenir compte des coupures entre séquences vidéo). Typiquement c'est le cas lorsque la vidéo est produite en studio.

Dans ce premier exemple, chaque coupure de séquence correspond donc à un début de GOP ou de GOV. Mais la période des GOPs ou des GOVs étant faible, chaque début de GOP ou de GOV ne correspond pas nécessairement à une coupure de séquence vidéo.

Une technique connue pour calculer les positions des coupures entre séquences dans une vidéo, consiste à calculer et à comparer l'énergie des premières unités élémentaires de type I des groupes GOPs ou GOVs.

Dans ce premier exemple, la description DN contient notamment :

- un descripteur pour décrire chaque groupe d'unités élémentaires du flux binaire,
- un descripteur pour décrire chaque unité élémentaire d'un groupe d'unités élémentaires.

De façon avantageuse, les descripteurs qui décrivent une unité élémentaire contiennent un pointeur vers la partie du flux binaire qui contient les données correspondant à ladite unité élémentaire.

On donne ci-dessous un exemple non limitatif d'une description XML d'une partie d'un flux binaire codé conformément à la norme MPEG-4, susceptible d'être utilisé pour mettre en oeuvre ce premier exemple de procédé selon l'invention:

```
<?xml version="1.0" encoding="UTF-8"?>
<mpeg4bitstream>
    <VOS>
```

```
          <VOSheader>akiyo.mpg4#0-20</VOSheader>
          <VO>
             <VOL>
                <VOLheader>akiyo.mpg4#21-50</VOLheader>
                <GOV>
                   <I_VOP>akiyo.mpg4#51-100</I_VOP >
                   <remainder>akiyo.mpg4#101-200</remainder>
                </GOV>
                <GOV>
                   <I_VOP>akiyo.mpg4#201-300</I_VOP >
                   <remainder>akiyo.mpg4#301-400</remainder>
                </GOV>
                ...
             </VOL>
          </VO>
       </VOS>
    </mpeg4bitstream>
```

Dans ce premier exemple, l'analyse syntaxique de la description DN permet de trouver les premières unités élémentaires de type I des groupes GOPs ou GOVs. Ainsi en recherchant dans la description les descripteurs relatifs aux premières unités élémentaires de type I des groupes GOPs ou GOVs, on récupère les données desdites unités élémentaires via le pointeur contenu dans ces descripteurs.

Le traitement T1 permet ensuite de calculer l'énergie de chacune de ces premières unités élémentaires de type I, et de comparer les énergies calculées. Les fortes variations d'énergie correspondent aux coupures de séquence. Finalement, un indicateur de début de séquence vidéo ayant une valeur booléenne VRAI est ajouté dans la description pour les groupes GOPs ou GOVs qui correspondent à des débuts de séquence. Un indicateur de début de séquence vidéo ayant une valeur booléenne FAUX est ajouté dans la description pour tous les autres groupes GOPs ou GOVs.

Ci-dessous on donne une version de la description DN dans laquelle des indicateurs de débuts de séquence ont été ajoutés. Ces indicateurs sont constitués par des attributs « sceneCutFlag » ajoutés aux éléments « GOV ».

```
<?xml version="1.0" encoding="UTF-8"?>
<mpeg4bitstream>
   <VOS>
       <VOSheader>akiyo.mpg4#0-20</VOSheader>
       <VO>
          <VOL>
             <VOLheader>akiyo.mpg4#21-50</VOLheader>
             <GOV sceneCutFlag="1">
                <I_VOP>akiyo.mpg4#51-100</I_VOP >
                <remainder>akiyo.mpg4#101-200</remainder>
             </GOV>
             <GOV sceneCutFlag="0">
                <I_VOP>akiyo.mpg4#201-300</I_VOP >
                <remainder>akiyo.mpg4#301-400</remainder>
             </GOV>
```

```
                ...
             </VOL>
          </VO>
       </VOS>
    </mpeg4bitstream>
```

Sur la figure 2 on a représenté un organigramme décrivant les étapes de ce premier exemple de procédé selon l'invention. D'après la figure 2, à la case K1 une variable ε est initialisée (ε=0). Puis les opérations suivantes sont effectuées en boucle :

- à la case K2, on recherche la balise XML suivante correspondant à un groupe GOPs ou GOVs (dans l'exemple ci-dessus ces balises sont notées <GOV>).
- à la case K3, on recherche la balise relative à la première unité élémentaire de type I du groupe GOP ou GOV courant (balise <I_frame> dans l'exemple ci-dessus), on récupère le pointeur correspondant (par exemple akiyo.mpg4#51-100, dans l'exemple ci-dessus) et on calcule l'énergie ε' de l'unité élémentaire localisée dans le flux binaire à l'emplacement indiqué par ce pointeur.
- à la case K4 on compare ε et ε'. Si |ε - ε'| >> 0 (où le signe >> signifie très supérieur à), le traitement se poursuit à la case K5. Sinon il se poursuit à la case K7.
- à la case K5, on donne la valeur de ε' à la variable ε (ε = ε').
- à la case K6, on ajoute un indicateur de début de séquence vidéo ayant une valeur booléenne VRAI dans la description du groupe GOP ou GOV courant (dans l'exemple ci-dessus, cet indicateur est constitué par un attribut « sceneCutFlag = '1' » ajouté à l'élément « GOV »). Le traitement se poursuit ensuite à la case K8.
- à la case K7, on ajoute un indicateur de début de séquence vidéo ayant une valeur booléenne FAUX dans la description du groupe GOP ou GOV courant (dans l'exemple ci-dessus, cet indicateur est constitué par un attribut « sceneCutFlag = '0' » ajouté à l'élément « GOV »). Puis le traitement se poursuit à la case K8.
- à la case K8, on vérifie si on a fini de parcourir la description. Si c'est le cas, le traitement est terminé. Sinon, le traitement reprend à la case K2.

**Exemple 2**

On va maintenant donner un second exemple de mise en oeuvre de l'invention, dans lequel le traitement T1 a pour objet de générer des informations de codage à ajouter à la description DN. La description enrichie qui est générée dans ce deuxième exemple est destinée à être utilisée pour lancer une lecture du contenu multimédia à partir d'un point choisi par un utilisateur (par exemple, l'utilisateur déplace un curseur sur une réglette pour positionner le point de départ à partir duquel il veut visualiser la vidéo). La description enrichie, destinée à être utilisée pour exécuter une telle application, doit contenir pour chaque unité élémentaire:

- le caractère dépendant / indépendant du codage de l'unité élémentaire (randomAccessPoint),
- le temps d'affichage de l'unité élémentaire (presentationTime),
- le temps de décodage de l'unité élémentaire (decodingTime),
- un pointeur vers la partie du flux binaire qui contient les données correspondant à l'unité élémentaire (bitstream.mpg4#251-900 par exemple).

La position des unités élémentaires dans le flux binaire est donnée par le pointeur. Elle est notamment utilisée pour déterminer dans la description DN l'unité élémentaire qui correspond au point de départ choisi par l'utilisateur. Le caractère dépendant / indépendant du codage des unités élémentaires est utilisé pour rechercher dans la description DN l'unité élémentaire codée indépendamment qui est la plus proche de l'unité élémentaire correspondant au point de départ choisi par l'utilisateur (le décodage ne peut en effet commencer qu'à partir d'une unité élémentaire codée indépendamment). Les temps d'affichage et de décodage de l'unité élémentaire sélectionnée comme point de départ sont ensuite calculées à partir de données récupérées dans la description DN et transmis au décodeur. Les données à décoder sont récupérées dans le flux binaire via le pointeur, afin d'être transmises au décodeur.
On donne ci-dessous un exemple non limitatif d'une description XML d'une partie d'un flux binaire codé conformément à la norme MPEG-4, susceptible d'être utilisée pour mettre en oeuvre ce deuxième exemple de procédé selon l'invention.

```
<?xml version="1.0" encoding="UTF-8"?>
<MPEG4videoBitstream>
    <VO>bitstream.mpg4#0-50</VO>
    <VOL>
        ...
        <vop_time_increment_resolution>0110100110100101</vop_time_increment_resolution>
        <fixed_vop_rate>1</fixed_vop_rate>
        <fixed_vop_time_increment>0101101010010110</fixed_vop_time_increment>
        ...
    </VOL>
    <GOV>bitstream.mpg4#220-250</GOV>
    <I_VOP>bitstream.mpg4#251-900</I_VOP>
    <P_VOP>bitstream.mpg4#901-1020</P_VOP>
    <B_VOP>bitstream.mpg4#1021-1100</B_VOP>
    ...
</MPEG4videoBitstream>
```

Un flux MPEG-4 contient une couche VOL (Video Oject Layer en anglais) qui contient elle-même une pluralité de groupes GOVs. Dans la description ci-dessus, l'élément <VOL> décrit le contenu de l'entête de la couche VOL. Il contient en particulier :

1) un élément <vop_time_increment_resolution> qui indique la valeur d'une unité de temps (appelée « tick » en anglais) ;
2) un élément <fixed_vop_rate> qui a une valeur binaire ; lorsque l'élément <fixed_vop_rate> vaut « 1 », toutes les unités élémentaires VOPs à l'intérieur des groupes GOV de la couche VOL sont codées avec un débit VOP fixe; lorsque l'élément <fixed_vop_rate> vaut « 0 », le temps d'affichage d'une unité élémentaire VOP se calcule à partir du <vop_time_increment_resolution> contenu dans l'entête de la couche VOL et à partir de données « modulo_time_base » et « vop_time_increment » qui sont contenues dans chaque entête de VOP (« modulo_time_base » est une base de temps locale exprimée en millisecondes, et « vop_time_increment » indique un nombre d'unités de temps (ticks en anglais) à partir d'un point de synchronisation lui-même défini par le « modulo_time_base ») ; 3) un élément <fixed_vop_time_increment> qui est utilisé pour calculer ce débit VOP fixe ; la valeur de l'élément <fixed_vop_time_increment> représente le nombre d'unités de temps entre deux VOPs successifs dans l'ordre d'affichage.

Ces trois données permettent donc de calculer la valeur du temps d'affichage d'une unité élémentaire. La valeur du temps de décodage d'une unité élémentaire se déduit par exemple de la valeur du temps d'affichage de ladite unité élémentaire, en ajoutant un écart fixe noté δ.

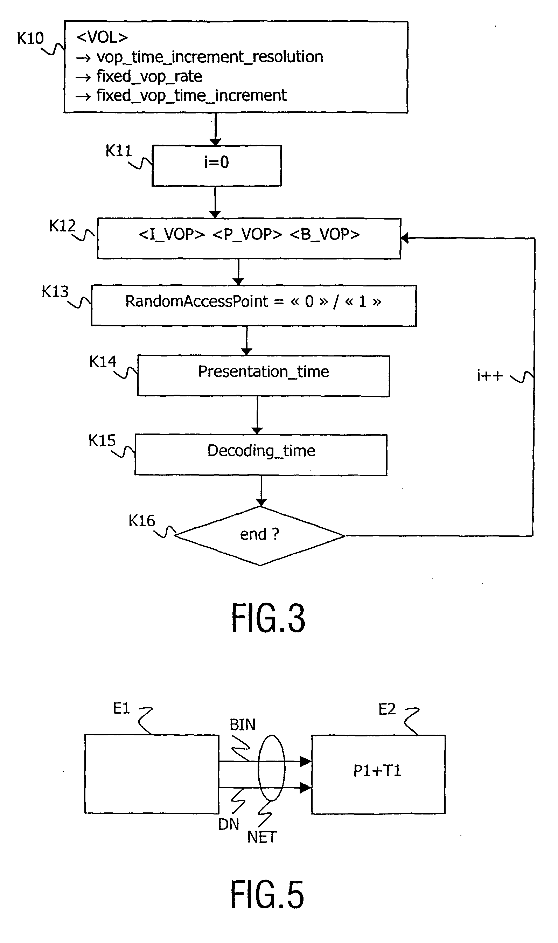

Sur la figure 3, on a représenté un organigramme décrivant les étapes de ce deuxième exemple de procédé selon l'invention :

- à la case K10, on recherche la balise XML correspondant à l'entête de la couche VOL, et on récupère les données <vop_time_increment_resolution>, <fixed_vop_rate> et <fixed_vop_time_increment>.
- à la case K11, une variable i est initialisée (i=0). Puis les opérations suivantes sont effectuées en boucle :
- à la case K12 on recherche la balise XML suivante correspondant à une unité élémentaire VOP(i) (dans l'exemple ci-dessus ces balises sont notées <I_VOP>, <P_VOP> et <B_VOP>).
- à la case K13, on ajoute à la description de l'unité élémentaire courante, un indicateur du caractère dépendant ou indépendant du codage de l'unité élémentaire courante. Dans l'exemple donné ci-dessous cet indicateur est constitué par un attribut noté randomAccessPoint qui a une valeur booléenne:

si l'unité élémentaire est de type I, randomAccessPoint= « 1 »
si l'unité élémentaire est de type P ou B, randomAccessPoint= « 0 ».

- à la case K14, on calcule le temps d'affichage pour l'unité élémentaire courante VOP(i) :

si fixed_vop_rate=1 alors

$$presentation\_time(i) = presentation\_time(i-1)$$
$$+ (fixed\_vop\_time\_increment / vop\_time\_increment\_resolution)$$

si fixed_vop_rate=0 alors

$$presentation\_time(i) = f(modulo\_time\_base, vop\_time\_increment/vop\_time\_increment\_resolution)$$

Et on ajoute la valeur obtenue, dans la description de l'unité élémentaire courante (dans l'exemple ci-dessous, un attribut noté presentation_time est ajouté à l'élément <VOP> courant).

- à la case K15, on calcule le temps de décodage de l'unité élémentaire courante :

$$decoding\_time(i) = presentation\_time(i) + \delta$$

Et on ajoute la valeur obtenue, dans la description de l'unité élémentaire courante (dans l'exemple ci-dessous, un attribut noté decoding_time est ajouté à l'élément <VOP> courant).
- à la case K16, on vérifie si on a fini de parcourir la description. Si c'est le cas, le traitement est terminé. Sinon, la variable i est incrémentée et le traitement reprend à la case K12.

On donne maintenant un exemple de description enrichie obtenue en utilisant un procédé tel que décrit en regard de la figure 3 :

```
<?xml version="1.0" encoding="UTF-8"?>
<MPEG4videoBitstream>
    <header>bitstream.mpg4#0-200</header>
    <VOP presentation_time= "0.40" decoding_time= "0.80" randomAccessPoint= "1">
            bitstream.mpg4#251-900</I_VOP>
    <VOP presentation_time= "0.80" decoding_time= "1.20" randomAccessPoint= "0">
            bitstream.mpg4#901-1020</P_VOP>
    <VOP presentation_time= "1.20" decoding_time= "1.60" randomAccessPoint= "0">
            bitstream.mpg4#1021-1100</B_VOP>
    ...
</MPEG4videoBitstream>
```

Cette description enrichie ne contient que les données nécessaires pour exécuter l'application envisagée (lancement de la lecture d'une vidéo à partir d'un point quelconque fixé par l'utilisateur). Notamment, les éléments <VO>, <VOL> et <GOV> de la description initiale obtenue par analyse syntaxique du flux binaire, ont été regroupés dans un seul élément noté <header>. Un même élément <VOP> est utilisé pour tous les types d'unités élémentaires (I, P, ou B). Des attributs presentation_time, decoding_time et randomAccessPoint ont été ajoutés à ces éléments <VOP>.

**Exemple 3**

On va maintenant donner un troisième exemple de mise en oeuvre de l'invention, dans lequel le traitement T1 est un traitement applicatif sur le contenu multimédia. Le traitement applicatif considéré ici à titre d'exemple est une concaténation de deux séquences vidéo issues de deux flux binaires différents. Dans ce type d'application, un utilisateur choisit de façon arbitraire un premier point de concaténation dans une première vidéo et un second point de concaténation dans une seconde vidéo. La partie de la première vidéo située avant le premier point de concaténation est destinée à être concaténée avec la partie de la seconde vidéo située après le second point de concaténation. Mais ces points de concaténation doivent être corrigés afin que :

- les unités élémentaires situées dans la première vidéo avant le premier point de concaténation puissent être décodées ;

- les unités élémentaires situées dans la seconde vidéo après le second point de concaténation puisse être décodée.

Lorsque les vidéos sont codées conformément à l'une des normes MPEG-2 ou MPEG-4, les unités élémentaires sont de type I, P ou B. Dans ce cas, le second point de concaténation doit être situé avant une unité élémentaire de type I. Et pour que les unités élémentaires de type B (qui sont codées par référence aux deux unités élémentaires de type I ou P qui les entourent) puissent être décodées, il faut que le premier point de concaténation soit placé après une unité élémentaire de type I ou P.

On donne ci-dessous un exemple d'une description d'un flux binaire codé conformément à la norme MPEG-2, ladite description étant susceptible d'être utilisée pour mettre en oeuvre ce troisième exemple de procédé selon l'invention.

```
<?xml version="1.0" encoding="UTF-8"?>
<!--Bitstream description for MPEG video file akiyo.mpg-->
<mpegbitstream>
<Header>

        ...
        <frame_rate> 0.25 </frame_rate>

        ...
    </Header>
<I_FRAME>akiyo.mpg#18-4658</I_FRAME>
<P_FRAME>akiyo.mpg#4659-4756</P_FRAME>
<B_FRAME>akiyo.mpg#4757-4772</B_FRAME>
<B_FRAME>akiyo.mpg#4773-4795</B_FRAME>
<P_FRAME>akiyo.mpg#4796-4973</P_FRAME>
<B_FRAME>akiyo.mpg#4974-5026</B_FRAME>
<B_FRAME>akiyo.mpg#5027-5065</B_FRAME>
<P_FRAME>akiyo.mpg#5066-5300</P_FRAME>
<B_FRAME>akiyo.mpg#5301-5366</B_FRAME>
<B_FRAME>akiyo.mpg#5367-5431</B_FRAME>
<P_FRAME>akiyo.mpg#5432-5705</P_FRAME>
<B_FRAME>akiyo.mpg#5706-5779</B_FRAME>
<B_FRAME>akiyo.mpg#5780-5847</B_FRAME>
<I_FRAME>akiyo.mpg#5848-10517</I_FRAME>
<B_FRAME>akiyo.mpg#10518-10933</B_FRAME>
<B_FRAME>akiyo.mpg#10934-11352</B_FRAME>
<P_FRAME>akiyo.mpg#11353-11943</P_FRAME>
<B_FRAME>akiyo.mpg#11944-12096</B_FRAME>
<B_FRAME>akiyo.mpg#12097-12306</B_FRAME>
<P_FRAME>akiyo.mpg#12307-12967</P_FRAME>
<B_FRAME>akiyo.mpg#12968-13198</B_FRAME>
<B_FRAME>akiyo.mpg#13199-13441</B_FRAME>
<P_FRAME>akiyo.mpg#13442-13911</P_FRAME>
<B_FRAME>akiyo.mpg#13912-14086</B_FRAME>
<B_FRAME>akiyo.mpg#14087-14313</B_FRAME>
```

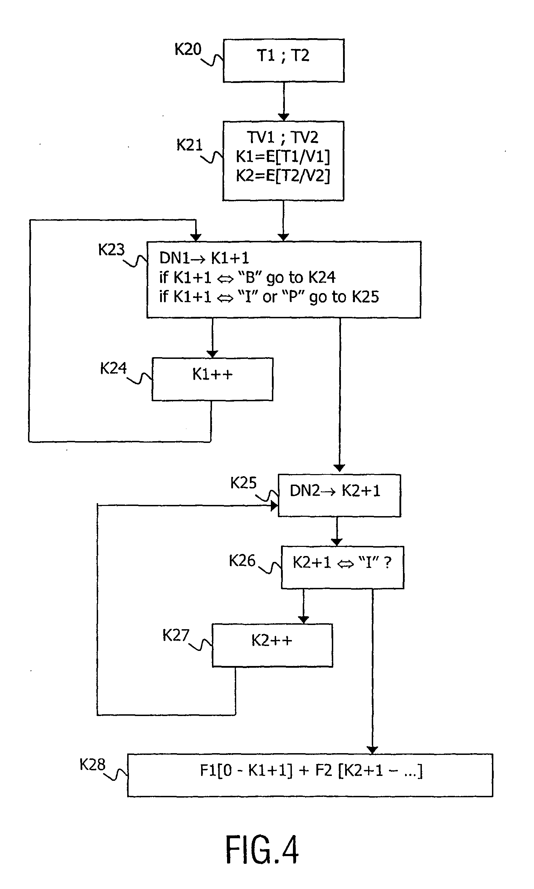

La figure 4 représente un organigramme décrivant les étapes de ce troisième exemple de procédé selon l'invention. Un tel procédé utilise une première description DN1 d'un premier flux binaire F1 obtenu par codage d'une première vidéo V1 et une seconde description DN2 d'un second flux binaire F2 obtenu par codage d'une seconde vidéo V2.

- A la case K20, un utilisateur choisit un premier instant de concaténation T1 dans la première vidéo V1 et un second instant de concaténation T2 dans la seconde vidéo V2.
- A la case K21, les débits image TV1 et TV2 des vidéo V1 et V2 sont récupérés dans les descriptions DN1 et DN2. Un premier rang d'image K1 est calculé à partir de l'instant T1 et du débit TV1 (KI=E[T1/TV1] où E est la fonction partie entière). Un second rang d'image K2 est calculé à partir de l'instant T2 et du débit TV2 (K2=E[T2/TV2]).

- A la case K23, la description DN1 est parcourue jusqu'à la (K1+1)ème image. Si la (K1+1)ème image est une image de type I ou P, le procédé se poursuit ensuite à la case K25. Sinon il se poursuit à la case K24.
- A la case K24 le rang d'image K1 est incrémenté (K1=K1+1) et le procédé reprend à la case K23.
- A la case K25, la description DN2 est parcourue jusqu'à la (K2+1)ème image.
- A la case K26 on vérifie si la (K2+1)ème image est une image de type I. Si c'est le cas, le procédé se poursuit ensuite à la case K28. Sinon il se poursuit à la case K27.
- A la case K27 le rang d'image K2 est décrémenté (K2=K2-1) et le procédé reprend à la case K25.
- Finalement à la case 28, on concatène les images du flux binaire F1 de rang inférieur ou égal à (K1+1) et les images du flux binaire F2 de rang supérieur ou égal à (K2+1).

Dans un autre mode de réalisation non représenté, le procédé selon l'invention tient compte des coupures entre séquences vidéo pour corriger les premier et second points de concaténation choisis par l'utilisateur.

L'homme du métier adaptera facilement le procédé qui vient d'être décrit à titre d'exemple, pour obtenir un procédé pour effectuer des traitements de type couper/coller.

La norme H263 publiée par l'ITU (International Telecommunications Union) concerne le codage vidéo pour des applications de vidéo-téléphonie. Cette norme utilise des notions similaires aux notions d'unités élémentaires de type I, P et B définies dans les normes MPEG. Un procédé du type de celui qui vient d'être décrit est donc applicable à un contenu multimédia codé selon la norme H263.

La norme MJPEG (Motion JPEG) est une norme de compression de vidéo pour des applications de stockage et plus particulièrement pour des applications de stockage en studio. MJPEG est une adaptation de la norme JPEG à la vidéo : chaque unité élémentaire est codée de façon indépendante (codage de type I) en utilisant la norme JPEG. Les opérations de concaténation, de coupage, de collage sont donc plus simples à réaliser lorsque les contenus multimédia sont codés selon la norme MJPEG. Dans ce cas, le seul problème à prendre en considération est le problème des coupures entre séquences vidéo.

**Exemple 4**

On va maintenant donner un quatrième exemple de mise en oeuvre de l'invention, dans lequel le traitement T1 est un traitement applicatif sur le contenu multimédia. Ce quatrième exemple s'applique à des normes de codage vidéo de la famille DV (DV, DVCAM, DVPRO). Les formats de codage DV utilisent un mode de compression de type I (c'est-à-dire que les unités élémentaires comprimées ne dépendent que d'elles-mêmes). Et chaque unité élémentaire contient à la fois des données vidéo et des données audio. Le traitement applicatif considéré ici à titre d'exemple est une modification de la partie audio d'une ou plusieurs unités élémentaires.

La description du flux binaire qui est utilisée pour cette application doit contenir pour chaque unité élémentaire au moins un descripteur décrivant la partie audio de l'unité élémentaire. Avantageusement, ce descripteur contient un pointeur vers la partie du flux binaire qui contient les données audio correspondantes. On donne ci-dessous un exemple d'une telle description :

```
<?xml version="1.0" encoding="UTF-8"?>
<dvprobitstream>
   <videoFrameData>
      <firstChannel>
         <DIF00>
            <Header>akiyo.dvp#21-30</Header>
            <Subcode>akiyo.dvp#31-40</Subcode>
            <Vaux>akiyo.dvp#41-50</Vaux>
            <Audio>akiyo.dvp#51-75</Audio>   →   <Audio>akiyo2.dvp#31-55</Audio>
            <Video>akiyo.dvp#76-100</Video>
         </DIF00>
         <DIF10... </DIF10>
         ...
         <DIFN0> ... </DIFN0>
      </firstChannel>
      <secondChannel>...</secondChannel>
   </videoFrameData>
   <videoFrameData> ...</videoFrameData>
   ...
</dvprobitstream>
```

Dans ce quatrième exemple, le procédé selon l'invention consiste à parcourir la description pour sélectionner un ou plusieurs éléments <Audio>, et à modifier les pointeurs desdits éléments <Audio>. Un exemple d'une telle modification a été représenté en gras dans la description donnée ci-dessus à titre d'exemple.

Sur la figure 5, on a représenté un diagramme en blocs d'un système selon l'invention comportant :

- une première entité E1 destinée à fournir un flux binaire BIN obtenu par codage d'un contenu multimédia CT et une description structurée DN du flux binaire BIN,
- et une seconde entité E2 destinée à effectuer une analyse syntaxique P1 de la description DN pour récupérer une ou plusieurs données D1 dans la description DN et à effectuer un traitement T1 sur le contenu multimédia CT à partir de la ou des données D1.

Les entités E1 et E2 sont en général des entités distantes. L'entité E2 reçoit par exemple le flux binaire BIN et la description associée DN via un réseau de transmission NET, par exemple via le réseau Internet.

Les exemples qui ont été décrits ont été choisis de façon à illustrer les deux modes de réalisation de l'invention (traitement ayant pour objet d'enrichir la description du flux binaire et traitement applicatif sur le contenu), en utilisant divers format de codage (MPEG, DVPRO, MJPEG, H263). L'invention n'est pas limitée aux exemples qui ont été donnés. Elle s'applique d'une façon générale à n'importe quel format de codage de contenu multimédia. Et elle permet d'effectuer une grande variété de traitements : d'une part des traitements ayant pour objet d'enrichir une description d'un flux binaire obtenu par codage d'un contenu multimédia, et d'autre part des traitements applicatifs sur des contenus multimédia.

## Revendications

1. Procédé pour effectuer un traitement (T1) sur au moins un contenu audio/vidéo (CT), comportant une étape d'analyse syntaxique (P1) d'une description structurée (DN) d'un flux binaire (BIN) obtenu par codage dudit contenu audio/vidéo selon un certain format de codage, ladite description comprenant un ou plusieurs descripteurs (D1) relatifs au codage selon ledit format de codage, **caractérisé en ce que** l'étape d'analyse syntaxique est effectuée pour récupérer dans ladite description un ou plusieurs descripteurs pointant vers des unités élémentaires d'un ou plusieurs types prédéfinis présentes dans le flux binaire, et **en ce que** le procédé comprend une étape d'exécution dudit traitement à partir du ou desdits descripteurs pointant afin de générer des descripteurs additionnels (IF) au delà de ceux définis par ledit format de codage, et d'adjoindre lesdits descripteurs additionnels à ladite description (DN) dans un langage de balisage (XML).

2. Procédé pour effectuer un traitement selon la revendication 1, **caractérisé en ce que** ladite description (DN) est écrite dans un langage de balisage (XML).

**3.** Procédé pour effectuer un traitement selon la revendication 1, **caractérisé en ce que** ledit contenu audio/vidéo contient une suite de séquences vidéo, et lesdits descripteurs additionnels sont des indications de coupure entre deux séquences vidéo.

**4.** Procédé pour effectuer un traitement selon la revendication 1, **caractérisé en ce que** ledit contenu audio/vidéo contient une pluralité d'unités élémentaires auxquelles correspondent un temps d'affichage et un temps de décodage, le codage d'une unité élémentaire étant dépendant ou indépendant des autres unités élémentaires, et lesdites descripteurs additionnels comportent :

- des indications du caractère dépendant ou indépendant du codage desdites unités élémentaires,
- une indication dudit temps d'affichage,
- une indication dudit temps de décodage.

**5.** Utilisation de descriptions structurées (DN1, DN2) décrivant un premier et un second flux binaires (F1, F2) obtenus par codage d'un premier et d'un second contenus audio/vidéo (V1, V2) selon un certain format de codage, lesdits description structurées étant obtenues par la mise en oeuvre d'un procédé selon la revendication 3, pour couper une partie dudit premier ou dudit second flux binaire, et/ou pour coller une partie dudit premier flux binaire dans ledit second flux binaire, et/ou pour concaténer une partie dudit premier flux binaire avec une partie dudit second flux binaire.

**6.** Utilisation d'une description structurée décrivant un flux binaire obtenu par codage d'un contenu audio/vidéo selon un certain format de codage, ladite description étant obtenue par la mise en oeuvre d'un procédé selon la revendication 4, pour lancer une lecture dudit contenu audio/vidéo à partir d'un point choisi par un utilisateur.

**7.** Programme comportant des instructions pour la mise en oeuvre d'un procédé pour effectuer un traitement selon l'une des revendications 1 ou 2, lorsque ledit programme est exécuté par un processeur.

**8.** Système comportant une première entité (E1) destinée à fournir un flux binaire obtenu par codage d'un contenu audio/vidéo selon un certain format de codage et une description structurée dudit flux binaire comprenant un ou plusieurs descripteurs (D1) relatifs au codage selon ledit format de codage" et une seconde entité (E2) destinée à effectuer une analyse syntaxique de ladite description pour récupérer dans ladite description un ou plusieurs descripteurs pointant vers des unités élémentaires d'un ou plusieurs types prédéfinis présentes dans le flux binaire, et à effectuer un traitement sur ledit contenu audio/vidéo à partir du ou desdits descripteurs pointant afin de générer des descripteurs additionnels (IF) au delà de ceux définis par ledit format de codage, et d'adjoindre desdits descripteurs additionnels à ladite description (DN) dans un langage de balisage (XML).

**9.** Equipement (E2) comportant des moyens d'analyse syntaxique d'une description structurée d'un flux binaire obtenu par codage d'un contenu audio/vidéo selon un certain format de codage, ladite description comprenant un ou plusieurs descripteurs (D1) relatifs au codage selon ledit format de codage, l'étape d'analyse syntaxique étant effectuée pour récupérer dans ladite description un ou plusieurs descripteurs pointant vers des unités élémentaires d'un ou plusieurs types prédéfinis présentes dans le flux binaire, et des moyens d'exécution d'un traitement sur ledit contenu audio/vidéo à partir du ou desdits descripteurs pointant afin de générer des descripteurs additionnels (IF) au delà de ceux définis par ledit format de codage, et d'adjoindre desdits descripteurs additionnels à ladite description (DN) dans un langage de balisage (XML).

**Claims**

**1.** Method for processing (T1) at least one multimedia content (CT), comprising a syntactic analysis step (P1) of a structured description (DV) of a bit stream (B1N) obtained via coding of said multimedia content according to a certain coding format, said description comprising one or several descriptors (D1) relating to the coding according to said coding format, **characterised in that** the syntactic analysis step is carried out for recovering in said description one or several descriptors pointing at elementary units of one or several predefined types present in the bit stream, and **in that** the method comprises an execution step of said processing based on the descriptor or pointing descriptors for the purpose of generating additional descriptors (1F) after those defined by said coding format and attaching said additional descriptors to said description (DN) in a markup language (XML).

**2.** A method for processing as claimed in claim 1, **characterised in that** said description (DN) in written in a markup language (XML).

3.  A method for processing as claimed in claim 1, **characterised in that** said multimedia content contains a sequel of video sequences, and said additional descriptors are cut-off indications between two video sequences.

4.  A method for processing as claimed in claim 1, **characterised in that** said multimedia content contains a plurality of basic units to which correspond a presentation time and a decoding time, the coding of a basic unit being dependent on or independent of the other basic units, and said additional descriptors comprising:

    - indications of the symbol dependent on or independent of the coding of said basic units,
    - an indication of the presentation time,
    - an indication of the decoding time.

5.  A use of structured descriptions (DN1, DN2) describing a first and a second bit stream (F1, F2) obtained via coding of a first and a second multimedia content (V1, V2) according to a certain coding format, said structured descriptions being obtained via the implementation of a method as claimed in claim 3, for cutting off a part of said first or said second bit stream, and/or for bonding a part of said first bit stream in said second bit stream, and/or for concatenating a part of said first bit stream to a part of said second bit stream.

6.  A use of a structured description describing a bit stream obtained via coding of a multimedia content according to a certain coding format, said description being obtained via the implementation of a method as claimed in claim 4, for launching a reading of said multimedia content based on a point chosen by a user.

7.  A program comprising instructions for implementing a method for processing as claimed in any one of the claims 1 or 2 when said program is carried out by a processor.

8.  A system comprising a first entity (E1) intended to supply a bit stream obtained via a coding of a multimedia content according to a certain coding format and a structured description of said bit stream comprising one or several descriptors (D1) relating to the coding according to said coding format, and a second entity (E2) intended to carry out a syntactic analysis of said description for recovering in said description one or several descriptors pointing to basic units of one or several predefined types present in the bit stream, and to process said multimedia content based on said pointing descriptor or descriptors for the purpose of generating additional descriptors (1F) after those defined by said coding format, and attaching said additional descriptors to said description (DN) in a markup language (XML).

9.  Equipment (E2) comprising syntactic analysis means for analysing a structured description of a bit stream obtained via a coding of a multimedia content according to a certain coding format. said description comprising one or several descriptors (D1) relating to the coding according to said coding format, the syntactic analysis step being carried out for recovering in said description one or several descriptors pointing to basic units of one or several predefined types present in the bit stream, and processing means for processing said multimedia content based on said pointing descriptor or descriptors for the purpose of generating additional descriptors (1F) after those defined by said coding format, and attaching said additional descriptors to said description (DN) in a markup language (XML).

**Patentansprüche**

1.  Verfahren zur Durchführung eines Verarbeitung (T1) mindestens eines Audio- bzw. Videoinhalts (CT), das einen Schritt der syntaktischen Analyse (P1) einer strukturierten Beschreibung (DN) eines Binärstroms (BIN) umfasst, der durch die Codierung des genannten Audio- bzw. Videoinhalts gemäß einem bestimmten Codierformat erzielt wurde, wobei die genannte Beschreibung einen oder mehrere zur Codierung des genannten Codierformats gehörige Deskriptoren (D1) umfasst, **dadurch gekennzeichnet, dass** der Schritt der syntaktischen Analyse durchgeführt wird, um in der genannten Beschreibung einen oder mehrere Deskriptoren wiederherzustellen, die auf elementare Einheiten einer oder mehrerer vorbestimmter Arten zeigen, die in dem Binärstrom vorliegen, und dass das Verfahren einen Schritt der Ausführung der genannten Verarbeitung ausgehend von dem oder den genannten zeigenden Deskriptoren umfasst, um außer den durch das genannte Codierformat definierten Deskriptoren zusätzliche Deskriptoren (IF) zu erzeugen und die genannten zusätzlichen Deskriptoren in einer Auszeichnungssprache (XML) der genannten Beschreibung (DN) zuzuordnen.

**2.** Verfahren zum Durchführen einer Verarbeitung nach Anspruch 1, **dadurch gekennzeichnet, dass** die genannte Beschreibung (DN) in einer Auszeichnungssprache (XML) geschrieben ist.

**3.** Verfahren zum Durchführen einer Verarbeitung nach Anspruch 1, **dadurch gekennzeichnet, dass** der genannte Audio- bzw. Videoinhalt eine Folge von Videosequenzen enthält und die genannten zusätzlichen Deskriptoren Angaben zur Unterbrechung zwischen zwei Videosequenzen sind.

**4.** Verfahren zum Durchführen einer Verarbeitung nach Anspruch 1, **dadurch gekennzeichnet, dass** der genannte Audio- bzw. Videoinhalt eine Vielzahl von elementaren Einheiten enthält, denen eine Anzeigezeit und eine Decodierzeit entspricht, wobei die Codierung einer elementaren Einheit von anderen elementaren Einheiten abhängig oder unabhängig ist, wobei die genannten zusätzlichen Deskriptoren Folgendes umfassen:

- Angaben zur Abhängigkeit oder Unabhängigkeit der Codierung der genannten elementaren Einheiten,
- eine Angabe der genannten Anzeigezeit,
- eine Angabe der genannten Decodierzeit.

**5.** Verwendung von strukturierten Beschreibungen (DN1, DN2), die einen ersten und einen zweiten Binärstrom (F1, F2) beschreiben, die durch Codierung eines ersten und eines zweiten Audio- bzw. Videoinhalts (V1, V2) gemäß einem bestimmten Codierformat erzielt wurden, wobei die genannten strukturierten Beschreibungen durch die Ausführung eines Verfahrens nach Anspruch 3 erzielt wurden, um einen Teil des genannten ersten oder des genannten zweiten Binärstroms zu unterbrechen und/oder einen Teil des genannten ersten Binärstroms in den genannten zweiten Binärstrom einzufügen und/oder einen Teil des genannten ersten Binärstroms mit einem Teil des genannten zweiten Binärstroms zu verketten.

**6.** Verwendung einer strukturierten Beschreibung, die einen Binärstrom beschreibt, der durch Codierung eines Audio- bzw. Videoinhalts gemäß einem bestimmten Codierformat erzielt wurde, wobei die genannte Beschreibung durch die Durchführung eines Verfahrens nach Anspruch 4 erzielt wurde, um einen Lesevorgang des genannten Audio- bzw. Videoinhalts von einer von einem Benutzer ausgewählten Stelle zu starten.

**7.** Programm mit Befehlen für die Durchführung eines Verfahrens zum Ausführen einer Verarbeitung nach einem der Ansprüche 1 oder 2, wenn das genannte Programm von einem Prozessor ausgeführt wird.

**8.** System mit einer ersten Einrichtung (E1), die dazu bestimmt ist, einen Binärstrom, der durch Codierung eines Audio- bzw. Videoinhalts gemäß einem bestimmten Codierformat erzielt wurde, und eine strukturierte Beschreibung des genannten Binärstroms mit einem oder mehreren zur Codierung gemäß dem genannten Codierformat gehörigen Deskriptoren (D1) zu liefern, und eine zweite Einrichtung (E2), die dazu bestimmt ist, eine syntaktische Analyse der genannten Beschreibung durchzuführen, um in der genannten Beschreibung einen oder mehrere Deskriptoren wiederherzustellen, die auf elementare Einheiten einer oder mehrerer vorbestimmten Arten zeigen, die in dem Binärstrom vorliegen, und ausgehend von dem oder den genannten zeigenden Deskriptoren eine Verarbeitung des genannten Audio- bzw. Videoinhalts durchzuführen, um außer den durch das genannte Codierformat definierten Deskriptoren zusätzliche Deskriptoren (IF) zu erzeugen und die genannten zusätzlichen Deskriptoren in einer Auszeichnungssprache (XML) der genannten Beschreibung (DN) zuzuordnen.

**9.** Einrichtung (E2) mit Mitteln zur syntaktischen Analyse einer strukturierten Beschreibung eines Binärstroms, der durch die gemäß einem bestimmten Codierformat vorgenommene Codierung eines Audio- bzw. Videoinhalts erzielt wurde , wobei die genannte Beschreibung einen oder mehrere Deskriptoren (D1) umfasst, die zur Codierung gemäß dem genannten Codierformat gehören, wobei der Schritt der syntaktischen Analyse durchgeführt wird, um in der genannten Beschreibung einen oder mehrere Deskriptoren wiederherzustellen, die auf elementare Einheiten einer oder mehrerer vorbestimmter Arten zeigen, die in dem Binärstrom vorliegen, und mit Mitteln zum Ausführen einer Verarbeitung des genannten Audio- bzw. Videoinhalts ausgehend von dem oder den genannten zeigenden Deskriptoren, um außer den durch das genannte Codierformat definierten Deskriptoren zusätzliche Deskriptoren (IF) zu erzeugen und die genannten zusätzlichen Deskriptoren in einer Auszeichnungssprache (XML) der genannten Beschreibung (DN) zuzuordnen.

FIG.1

FIG.2

K10 — **<VOL>**
→ vop_time_increment_resolution
→ fixed_vop_rate
→ fixed_vop_time_increment

K11 — i=0

K12 — <I_VOP> <P_VOP> <B_VOP>

K13 — RandomAccessPoint = « 0 » / « 1 »

K14 — Presentation_time

K15 — Decoding_time

K16 — end ?

i++

## FIG.3

E1

BIN

DN
NET

E2

P1+T1

## FIG.5

K20 ~ | T1 ; T2 |

K21 ~ | TV1 ; TV2
K1=E[T1/V1]
K2=E[T2/V2] |

K23 ~ | DN1→ K1+1
if K1+1 ⇔ "B" go to K24
if K1+1 ⇔ "I" or "P" go to K25 |

K24 ~ | K1++ |

K25 ~ | DN2→ K2+1 |

K26 ~ | K2+1 ⇔ "I" ? |

K27 ~ | K2++ |

K28 ~ | F1[0 - K1+1] + F2 [K2+1 – ...] |

# FIG.4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 0167771 A2
- WO 0169936 A
- US 6233278 B

- WO 0145391 A
- GB 2361097 A